# EUROPÄISCHE PATENTSCHRIFT

(11) **EP 2 398 679 B1**
(45) Veröffentlichungstag und Bekanntmachung des Hinweises auf die Patenterteilung: **29.05.2013**
(21) Anmeldenummer: 10700016.8
(22) Anmeldetag: 04.01.2010
(51) Int. Cl.: B60S 1/38, B60S 1/40

(54) **WISCHBLATT MIT EINEM ANSCHLUSSTEIL ZUR ANLENKUNG AN EINEM WISCHARM**
WIPER BLADE HAVING A CONNECTION COMPONENT FOR LINKING TO A WIPER ARM
BALAI D'ESSUIE-GLACE AVEC UNE PIECE DE RACCORDEMENT POUR L'ARTICULATION AVEC UN BRAS D'ESSUIE-GLACE

(30) Priorität: 20.02.2009 DE 102009001025
(43) Veröffentlichungstag der Anmeldung: 28.12.2011
(73) Patentinhaber: Robert Bosch GmbH, 70442 Stuttgart (DE)
(72) Erfinder: WILMS, Christian, B-3582 Koersel-Beringen (BE)
(86) Internationale Anmeldenummer: PCT/EP2010/050002
(87) Internationale Veröffentlichungsnummer: WO 2010/094513

(56) Entgegenhaltungen:
- EP-A1- 1 745 998
- DE-A1- 10 000 374
- DE-A1-102005 019 389
- DE-A1-102006 022 389

## Beschreibung

### Stand der Technik

Die vorliegende Erfindung betrifft ein Wischblatt für einen Scheibenwischer, mit einer Wischleiste und einem an der Wischleiste fixierten Anschlussteil zur Anlenkung der Wischleiste an einem Wischarm, der über ein Gelenkelement um eine Schwenkachse schwenkbar mit dem Anschlussteil verbindbar ist und über einen Sicherungssteg mit einem abgewinkelten Sicherungshaken am Anschlussteil fixierbar ist, wobei das Anschlussteil an seiner von der Wischleiste abgewandten Seite eine taschenartige Vertiefung zur Aufnahme des abgewinkelten Sicherungshakens aufweist.

Die DE 10 2005 019 389 A1 beschreibt ein derartiges Wischblatt, bei dem nach dem sogenannten Sidelock-Prinzip ein Wischarm mit seiner Wischstange schwenkbar um eine zugeordnete Schwenkachse an einem mit einer Wischleiste verbundenen Anschlusselement angelenkt ist. Das Anschlusselement weist eine Abdeckkappe mit einer Öffnung bzw. Vertiefung für einen dem Wischarm zugeordneten Sicherungshaken auf, die zur Fahrzeugscheibe hin offen ist, um ein Abfließen von Wasser auf der Anströmseite des Wischblatts zu ermöglichen. Das Wischblatt weist zur Verbesserung seines Strömungsverhaltens im Wischbetrieb einen Spoiler auf. Im Wischbetrieb wird das Wischblatt von dem Wischarm in entsprechenden Aufwärts- und Abwärtsbewegungen über ein zugeordnetes Wischfeld auf einer Kraftfahrzeugscheibe bewegt, um diese von Regen- und Spritzwasser zu befreien.

Nachteilig am Stand der Technik ist, dass im Wischbetrieb dieses Wischblatts Regen- und Spritzwasser durch Öffnungen und Spalte zwischen der Abdeckkappe, dem Anschlusselement und dem Wischblatt auf Grund eines hohen Drucks des Fahrtwinds in die Abdeckkappe hinein gepresst wird. Das in der Abdeckkappe gesammelte Wasser wird durch einen insbesondere bei einer Abwärtsbewegung des Wischblatts hinter dem Spoiler erzeugten Unterdruck aus der Abdeckkappe gesaugt und durch die Luftströmung bei der Abwärtsbewegung auf das bereits gereinigte Wischfeld gespritzt. Dieser Vorgang wird als "Overspray" oder "Wasserüberspritzen" bezeichnet und wird als störend empfunden.

DE-A-102006022 389 offenbart den Oberbegriff des Anspruchs 1.

### Offenbarung der Erfindung

Eine Aufgabe der Erfindung ist es daher, ein neues Wischblatt für einen Scheibenwischer bereit zu stellen, bei dem zumindest eine Reduzierung eines im Wischbetrieb auftretenden "Oversprays" erreicht wird.

Dieses Problem wird gelöst durch ein Wischblatt für einen Scheibenwischer, mit einer Wischleiste und einem an der Wischleiste fixierten Anschlussteil zur Anlenkung der Wischleiste an einem Wischarm. Dieser ist über ein Gelenkelement um eine Schwenkachse schwenkbar mit dem Anschlussteil verbindbar und über einen Sicherungssteg mit einem abgewinkelten Sicherungshaken am Anschlussteil fixierbar. Das Anschlussteil weist an seiner von der Wischleiste abgewandten Seite eine taschenartige Vertiefung zur Aufnahme des abgewinkelten Sicherungshakens auf. Die taschenartige Vertiefung ist auf ihrer der Wischleiste zugewandten Seite wasserdicht abgeschlossen.

Die Erfindung ermöglicht somit, ein Ein- bzw. Austreten von Wasser in das bzw. aus dem Anschlussteil im Wischbetrieb des Wischblatts über die taschenartige Vertiefung zu verhindern, sodass ein im Wischbetrieb auftretendes "Overspray" zumindest reduziert werden kann.

Gemäß einer Ausführungsform weist das Anschlussteil eine Abdeckkappe auf, an der die taschenartige Vertiefung ausgebildet ist.

Somit kann ein einfaches und kostengünstiges Anschlussteil bereitgestellt werden.

Das Anschlussteil, insbesondere die Abdeckkappe, weist bevorzugt an seiner von der Wischleiste abgewandten Seite einen nutartigen Aufnahmekanal zur Aufnahme des Sicherungsstegs auf. Der Aufnahmekanal ist mit der Vertiefung verbunden und auf seiner der Wischleiste zugewandten Seite wasserdicht abgeschlossen.

Somit kann eine vergleichsweise niedrige Bauhöhe des Wischblatts mit dem daran angelenkten Wischarm erzielt werden, wobei ein Ein- bzw. Austreten von Wasser in das bzw. aus dem Anschlussteil bzw. der Abdeckkappe im Wischbetrieb des Wischblatts über den Aufnahmekanal verhindert werden kann.

Die von der Wischleiste abgewandte Seite des Anschlussteils, insbesondere der Abdeckkappe, ist vorzugsweise öffnungsfrei ausgebildet, um im Wischbetrieb ein Durchsickern von Wasser über die von der Wischleiste abgewandte Seite des Anschlussteils zu verhindern.

Die Erfindung ermöglicht somit, ein Ein- bzw. Austreten von Wasser in das bzw. aus dem Anschlussteil im Wischbetrieb des Wischblatts über die von der Wischleiste abgewandte Seite des Anschlussteils zu verhindern.

Gemäß der Erfindung weist das Anschlussteil, insbesondere die Ab-deckkappe, an seiner der Wischleiste zugewandten Seite ein Bodenelement auf, das die der Wischleiste zugewandte Seite des Anschlussteils zumindest abschnittsweise wasserdicht abschließt, um im Wischbetrieb ein Ein- und/oder Austreten von Wasser in das und/oder aus dem Anschlussteil über die der Wischleiste zugewandte Seite des Anschlussteils im Wesentlichen zu verhindern.

Somit kann ein Einpressen von Spritz- und Regenwasser in das Anschlussteil im Wischbetrieb und somit auch ein Heraussaugen von in dem Anschlussteil angesammeltem Wasser zumindest reduziert werden.

Das Bodenelement ist bevorzugt dazu ausgebildet, im Wischbetrieb eine Reduzierung von aus dem Anschlussteil, insbesondere der Abdeckkappe, austretendem Wasser zumindest an einer dem Wischarm abgewandten Seite des Anschlussteils zu bewirken. Das Anschlussteil, insbesondere die Abdeckkappe, bildet an seiner dem Wischarm zugewandten Seite mit dem Bodenelement eine Austrittsöffnung aus, wobei das Bodenelement dazu ausgebildet ist, beim Wischbetrieb in das Anschlussteil eintretendes Wasser zu der Austrittsöffnung abzuleiten.

Die Erfindung ermöglicht somit ein kontrolliertes Ableiten von in dem Anschlussteil angesammeltem Wasser, sodass ein im Wischbetrieb auftretendes "Overspray" zumindest reduziert werden kann.

Gemäß einer Ausführungsform bildet das Anschlussteil, insbesondere die Abdeckkappe und das Bodenelement, eine Aussparung aus, in der ein an der Wischleiste fixiertes Anschlusselement befestigbar ist. Das Gelenkelement weist bevorzugt einen dem Wischarm zugeordneten Gelenkbolzen und eine dem Anschlusselement zugeordnete Lagerbuchse zur schwenkbaren Lagerung des Gelenkbolzens auf, wobei das Anschlussteil, insbesondere die Abdeckkappe, an seiner dem Wischarm zugewandten Seite eine Öffnung aufweist, durch die der Gelenkbolzen in die Lagerbuchse einführbar ist.

Somit kann ein Anschlussteil bereitgestellt werden, das auch bei gebräuchlichen Flachbalkenwischleisten mit vormontierten Anschlusselementen Anwendung finden kann.

Gemäß einer Ausführungsform ist das Anschlussteil, insbesondere die Abdeckkappe und das Bodenelement, einstückig ausgebildet.

Die Erfindung ermöglicht somit die Bereitstellung eines auf einfache Art und Weise herzustellenden Anschlussteils.

Das Anschlussteil ist bevorzugt durch Kunststoffspritzen ausgebildet.

Somit kann ein kostengünstiges Anschlussteil bereitgestellt werden.

Das Anschlussteil weist bevorzugt Befestigungsmittel zur Befestigung an der Wischleiste auf. Gemäß einer Ausführungsform ist das Anschlussteil durch Kunststoffspritzen an der Wischleiste befestigt.

Die Erfindung ermöglicht somit die Bereitstellung eines Wischblatts, bei dem das Anschlussteil sicher und zuverlässig mit der Wischleiste verbindbar ist.

Das Gelenkelement weist bevorzugt einen dem Wischarm zugeordneten Gelenkbolzen und eine Lagerbuchse zur schwenkbaren Lagerung des Gelenkbolzens auf. Die Lagerbuchse ist durch das Kunststoffspritzen an dem Anschlussteil, insbesondere an der Abdeckkappe, befestigt.

Somit kann das erfindungsgemäße Wischblatt auf einfache Art und Weise hergestellt werden, wobei auf eine Bereitstellung eines separaten, an der Wischleiste vormontierten Anschlusselements verzichtet werden kann.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine perspektivische Ansicht eines Ausschnitts eines Wischblatts mit einer Wischleiste, an der eine Anschlussvorrichtung mit einem Anschlussteil gemäß einer ersten Ausführungsform, das eine Abdeckkappe aufweist, vorgesehen ist,
Fig. 2 eine perspektivische Ansicht einer Oberseite der Abdeckkappe von Fig. 1,
Fig. 3 eine Draufsicht auf die Oberseite der Abdeckkappe von Fig. 1,
Fig. 4 eine Seitenansicht einer im montierten Zustand dem Wischarm von Fig. 1 zugewandten Seite der Abdeckkappe von Fig. 1,
Fig. 5 eine Seitenansicht der Abdeckkappe von Fig. 1, gesehen in axialer Richtung der Abdeckkappe,
Fig. 6 eine perspektivische Ansicht der Unterseite der Abdeckkappe von Fig. 1,
Fig. 7 eine perspektivische Ansicht eines der Abdeckkappe von Fig. 1 zugeordneten Bodenelements,
Fig. 8 eine Draufsicht auf eine Oberseite des Bodenelements von Fig. 8,
Fig. 9 eine perspektivische Ansicht der Unterseite der mit dem Bodenelement von Fig. 7 versehenen Abdeckkappe von Fig. 1,
Fig. 10 eine perspektivische Ansicht eines Ausschnitts des Tragelements der Wischleiste von Fig. 1 mit einem daran fixierten Anschlusselement, und
Fig. 11 eine Draufsicht auf eine Unterseite der Wischleiste von Fig. 1 mit einer daran befestigten Abdeckkappe gemäß einer zweiten Ausführungsform.

### Beschreibung der Ausführungsbeispiele

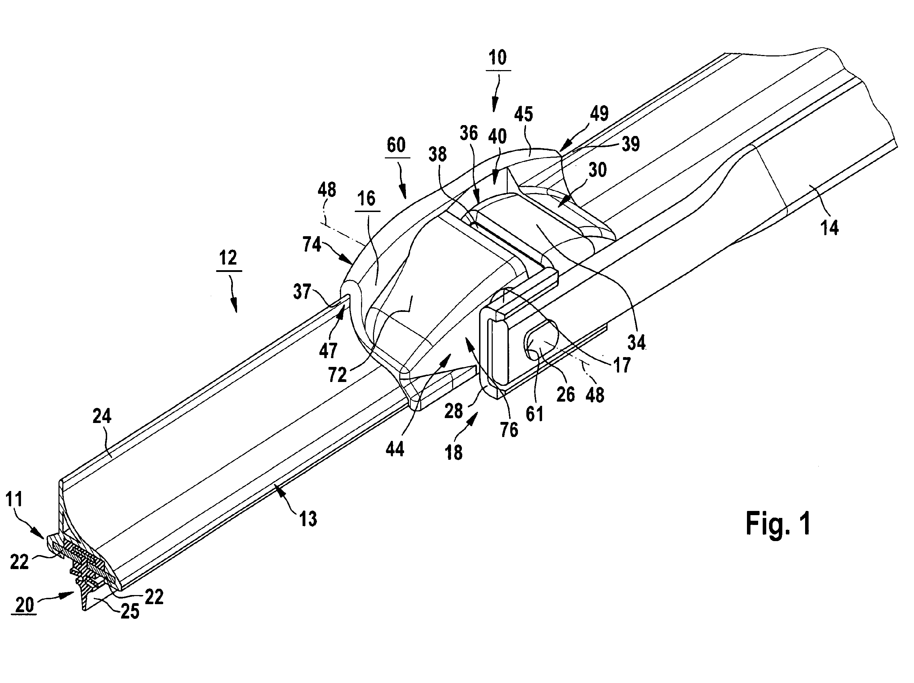

Fig. 1 zeigt einen Abschnitt eines Wischblatts 12 und eines Wischarms 14, der über eine Anschlussvorrichtung 10 an dem Wischblatt 12 befestigt ist, bevorzugt nach dem sogenannten Sidelock-Prinzip. Das Wischblatt 12 weist eine Wischleiste 20 mit einer Wischlippe 25 auf und ist bevorzugt in Flachbalkenbauweise ausgebildet, d.h. die Wischleiste 20 hat seitliche Längsnuten, in denen zwei Tragschienen 22, vorzugsweise Federschienen, angeordnet sind. Alternativ hierzu kann die Wischleiste 20 als Hohlprofil mit einem etwa zentralen Längskanal ausgebildet sein, in dem eine einzelne Federschiene angeordnet ist.

Auf der von der Wischlippe 25 abgewandten Seite der Federschienen 22 ist zur Verbesserung der Strömungseigenschaften des Wischblatts 12 im Wischbetrieb ein Spoiler 24 vorgesehen. Dieser ist bevorzugt aus einem gummielastischen Material ausgebildet und z.B. in axialer Richtung des Wischblatts 12 auf die Federschienen 22 aufgeschoben, wobei laterale Längsseiten 11, 13 des Spoilers 24 zugeordnete Außenkanten der Federschienen 22 vorzugsweise klammerartig umgreifen.

Der Wischarm 14 ist im Bereich seines freien Endes als einfache Stange ausgebildet, die einen im Wesentlichen rechteckigen Querschnitt aufweist und mit einer Öffnung 61 versehen ist. Die im Querschnitt längere Seite der Stange verläuft senkrecht zu einer entsprechenden Fahrzeugscheibe, die hier aus Gründen der Übersichtlichkeit nicht dargestellt ist. Damit verläuft die längere Seite des rechteckigen Querschnitts im Wesentlichen parallel zur Längserstreckung des Querschnitts des Wischblatts 12.

Die Anschlussvorrichtung 10 umfasst beispielhaft ein erstes, dem Wischblatt 12 zugeordnetes Anschlussteil 60, sowie ein zweites, dem Wischarm 14 zugeordnetes Anschlussteil 18. Das erste Anschlussteil 60 ist fest mit dem Wischblatt 12 bzw. der Wischleiste 20 verbunden. Die Wischleiste 20 mit dem daran befestigten Anschlussteil 60 ist bevorzugt gelenkfrei ausgebildet. Das zweite Anschlussteil 18 ist fest mit dem Wischarm 14 verbunden.

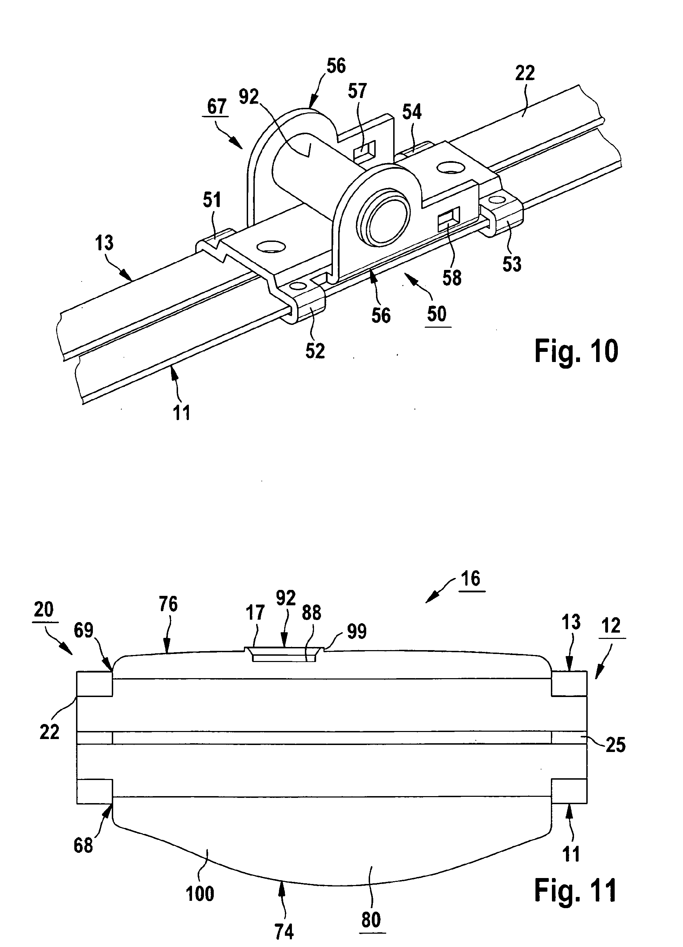

Gemäß einer ersten Ausführungsform weist das erste Anschlussteil 60 zur Anlenkung der Wischleiste 20 an dem Wischarm 14 ein an der Wischleiste 20 fixiertes Anschlusselement 50 (Fig. 10) und eine Abdeckkappe 16 auf. Die Abdeckkappe 16 weist an ihrer von der Wischleiste 20 abgewandten Seite 72, die nachfolgend zur Vereinfachung der Beschreibung als "Kappenoberseite" bezeichnet wird, einen nutartigen Aufnahmekanal 38 auf, der mit einer taschenartigen Vertiefung 40 verbunden ist. Die Kappenoberseite 72 weist im Bereich einer von dem Wischarm 14 abgewandten Seite 74, die nachfolgend zur Vereinfachung der Beschreibung als "Kappenrückseite" bezeichnet wird, eine Spoilerwand 45 auf. An ihrer dem Wischarm 14 zugewandten Seite 76, die nachfolgend zur Vereinfachung der Beschreibung als "Kappenvorderseite" bezeichnet wird, hat die Abdeckkappe 16 eine Öffnung 17, die einen Zugriff auf ein bevorzugt als Sackloch ausgebildetes Lagerelement 67 (Fig. 10), das z.B. eine Lagerbuchse 92 (Fig. 10) aufweist, ermöglicht. An ihren axialen Endbereichen weist die Abdeckkappe 16 beispielhaft Anschlussprofile 47, 49 auf, die dazu ausgebildet sind, zugeordnete Endbereiche 37 bzw. 39 des Spoilers 24 bzw. Wischblatts 12 aufzunehmen. In Fig. 1 umschließt die Abdeckkappe 16 das Anschlusselement 50 (Fig. 10) bzw. deckt dieses ab.

Das zweite Anschlussteil 18 ist beispielhaft als Blechbiegeteil ausgebildet und umgreift das freie Ende des Wischarms 14 mit einem ersten Abschnitt 28 klammerartig. An dem ersten Abschnitt 28 ist ein Gelenkbolzen 26 vorgesehen, dessen Längserstreckung etwa senkrecht zur Längserstreckung des Wischarms 14 verläuft. Der Bolzen 26 ist durch die Öffnung 61 des Wischarms 14 geführt und an diesem befestigt, z.B. vernietet, sodass der Bolzen 26 das zweite Anschlussteil 18 an dem Wischarm 14 fixiert. Ein zweiter Abschnitt 30 des zweiten Anschlussteils 18 erstreckt sich senkrecht vom freien Ende des Wischarms 14 in Richtung des ersten Anschlussteils 60 und übergreift dieses brückenartig. Dadurch ist ein Sicherungsmittel vorgesehen, das durch einen brückenartigen Sicherungssteg 34 des zweiten Abschnitts 30 gebildet ist, der an seinem freien Ende einen - in Fig. 1 nach unten - abgewinkelten Sicherungshaken 36 aufweist. Der Sicherungssteg 34 verläuft etwa senkrecht zur Längserstreckung des Wischarms 14, parallel zur Oberfläche der Fahrzeugscheibe oder etwa parallel zum Gelenkbolzen 26 bzw. zu der Ebene, die durch die Federschienen 22 gebildet ist. Ein geeignetes zweites Anschlussteil 18 ist beispielhaft in der DE 10 2005 019 389 A1 beschrieben, sodass hier aus Gründen der Knappheit der Beschreibung auf eine genauere Beschreibung verzichtet werden kann.

Bei einer Montage des Wischblatts 12 an dem Wischarm 14 greift der Sicherungssteg 34 in den Aufnahmekanal 38 ein und der Sicherungshaken 36 greift in die taschenartige Vertiefung 40 ein. Dadurch greifen erstes Anschlussteil 60 und zweites Anschlussteil 18 ineinander, sodass der Wischarm 14 durch den mit dem Sicherungshaken 36 versehenen Sicherungssteg 34 an dem mit der Abdeckkappe 16 versehenen Anschlusselement 50 (Fig. 10) fixiert ist. Der Gelenkbolzen 26 greift durch die Öffnung 17 an der Kappenvorderseite 76 in die Lagerbuchse 92 (Fig. 10), wodurch ein Gelenkelement 44 mit einer Schwenkachse 48 gebildet wird. Der Wischarm 14 ist hierbei um die Schwenkachse 48 schwenkbar mit dem Anschlusselement 50 (Fig. 10) verbunden. Das erste Anschlussteil 60 ist somit drehbeweglich mit dem zweiten Anschlussteil 18 verbunden.

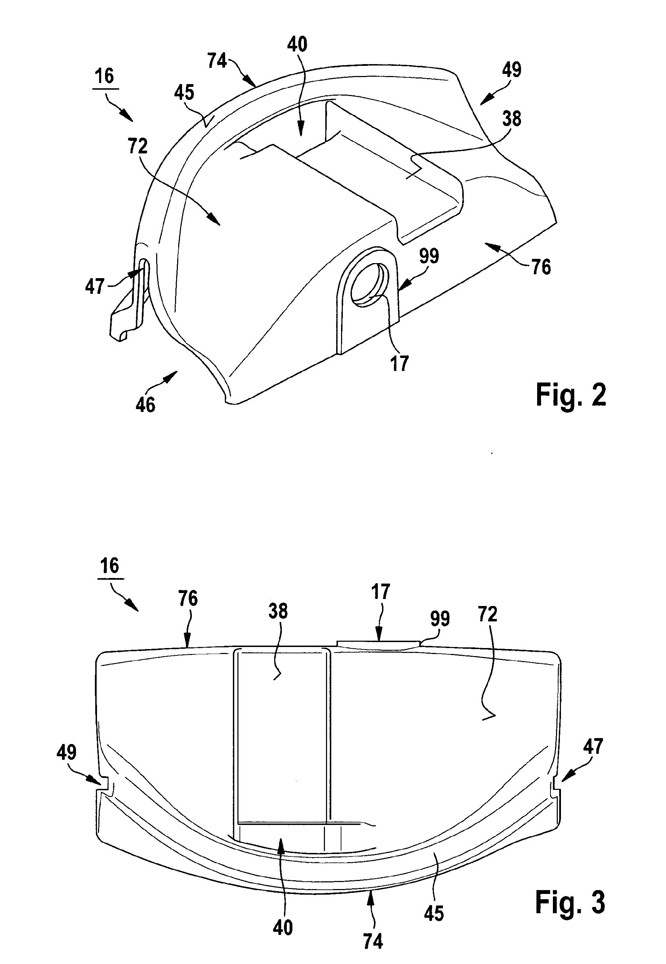

Fig. 2 zeigt eine erste Ausführungsform der Abdeckkappe 16 von Fig. 1 mit einem ausluchtartigen Vorsprung 99, der an der Kappenvorderseite 76 ausgebildet ist und die Öffnung 17 aufweist. Die Kappenoberseite 72 ist beispielhaft schildkrötenartig und buckelförmig ausgebildet. Der an der Kappenoberseite 72 ausgebildete Aufnahmekanal 38 und die taschenartige Vertiefung 40 sind bevorzugt derart in die Kappenoberseite 72 eingelassen bzw. abgesenkt, dass der Sicherungssteg 34 und der Sicherungshaken 36 von Fig. 1 nach einer Montage an der Abdeckkappe 16 mit ihren vom Wischblatt 12 von Fig. 1 abgewandten Oberflächen etwa bündig mit der vom Wischblatt 12 von Fig. 1 abgewandten Oberfläche der Kappenoberseite 72 abschließen. Die Spoilerwand 45 ist bevorzugt bogenförmig am - in Fig. 2 - oberen Ende der Kappenrückseite 74 ausgebildet.

Die Kappenvorder-, -ober- und -rückseite 76, 72, 74 der Abdeckkappe 16 bilden eine annähernd U-förmige Struktur aus, die in Fig. 2 etwa auf den Kopf gestellt ist, wie am Anschlussprofil 47 erkennbar. Diese Struktur hat eine Seite 46, die in Fig. 1 der Wischleiste 20 zugewandt ist und nachfolgend zur Vereinfachung der Beschreibung als "Kappenunterseite" bezeichnet wird. Diese Kappenunterseite 46 ist gemäß der ersten Ausführungsform zur Wischleiste 20 von Fig. 1 hin offen.

Fig. 3 zeigt die Kappenoberseite 72 der Abdeckkappe 16 von Fig. 1 einerseits zur Verdeutlichtung der bogenförmigen Ausgestaltung der Spoilerwand 45 und andererseits zur Illustration einer beispielhaften Ausgestaltung des Aufnahmekanals 38 und der mit diesem verbundenen, taschenartigen Vertiefung 40. Bevorzugt ist die Kappenoberseite 72 öffnungsfrei ausgebildet, um im Wischbetrieb ein Durchsickern von Wasser über die Kappenoberseite 72 in einen zwischen der Abdeckkappe 16 und dem Wischblatt 12 von Fig. 1 ausgebildeten Bereich zu verhindern. Zumindest sind jedoch der Aufnahmekanal 38 und die taschenartige Vertiefung 40 zum Wischblatt 12 von Fig. 1 hin wasserdicht abgeschlossen, um ein Ein- bzw. Austreten von Wasser in diesen Bereich zu verhindern.

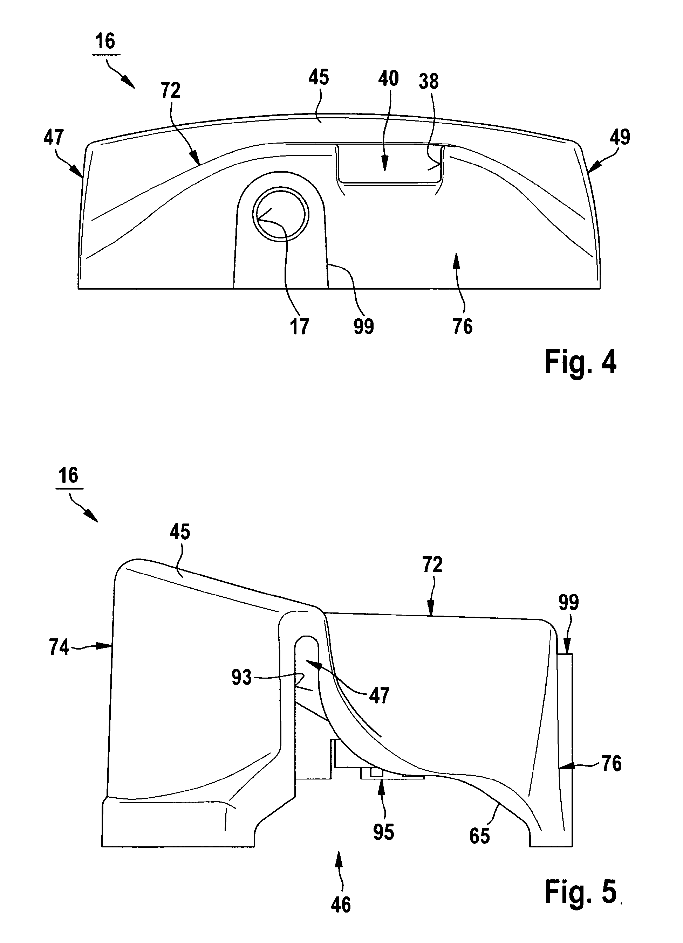

Fig. 4 zeigt die Kappenvorderseite 76 der Abdeckkappe 16 von Fig. 1 mit dem ausluchtartigen Vorsprung 99, der die Öffnung 17 aufweist. Fig. 4 verdeutlicht die nutartige Ausgestaltung des Aufnahmekanals 38 sowie die an der Kappenoberseite 72 vorgesehene Spoilerwand 45.

Fig. 5 zeigt die Abdeckkappe 16 von Fig. 1 mit einem an der Kappenunterseite 46 ausgebildeten Lager- und Befestigungselement 95 zur Aufnahme einer Lagerbuchse 92 eines zugeordneten Anschlusselements 50 (Fig. 10), wie unten bei Fig. 10 beschrieben. Fig. 5 verdeutlicht die offene Kappenunterseite 46 und zeigt das Anschlussprofil 47. Dieses hat eine etwa der Form des Spoilers 24 von Fig. 1 entsprechende Aussparung 65 mit einer Nut 93 zur Aufnahme des Endbereichs 37 des Spoilers 24 bzw. Wischblatt 12 von Fig. 1.

Die Kappenrückseite 74 ist wie die Spoilerwand 45 etwa bogenförmig ausgebildet. Insbesondere weist die Kappenrückseite 74 vorzugsweise eine im Wesentlichen durchgehende glatte Außenwand auf, an der sich im Wischbetrieb kein Wasser festsetzen kann.

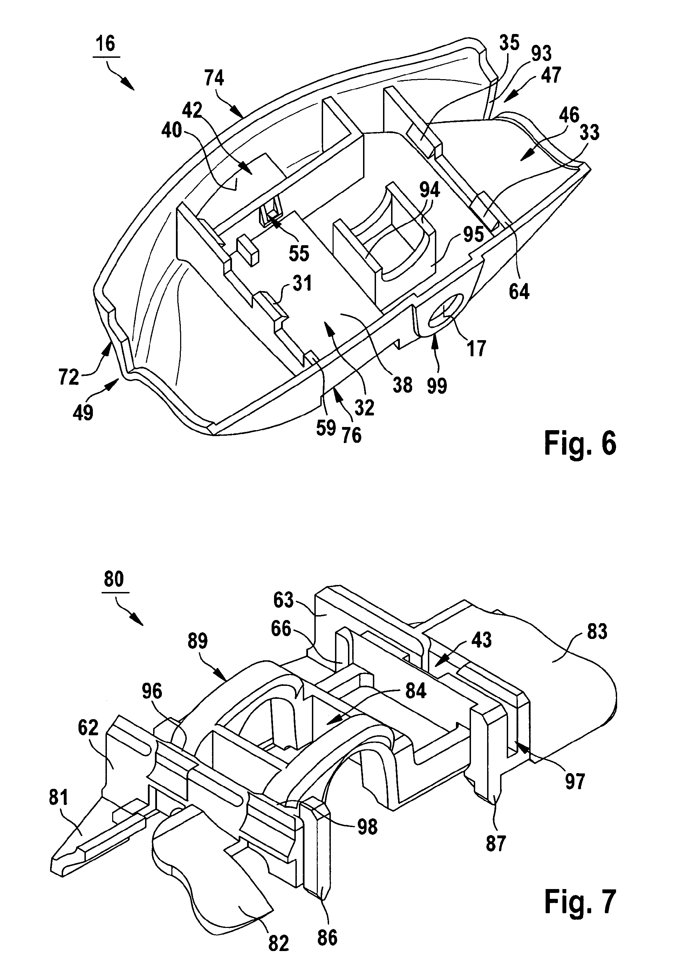

Fig. 6 zeigt die Kappenunterseite 46 der Abdeckkappe 16 von Fig. 1 mit dem Lager- und Befestigungselement 95. Dieses ist bevorzugt zum klammerartigen Umgreifen einer Lagerbuchse 92 eines zugeordneten Anschlusselements 50 (Fig. 10) ausgebildet und hat hierzu beispielhaft zwei federnde Klammer- bzw. Schnappglieder 94. Diese werden bei einem Einpressen der Lagerbuchse 92 in das Element 95 federnd auseinander gedrückt, um dann nach dem Einpressen in ihre Ausgangspositionen zurück zu federn und die Buchse 92 zu umklammern.

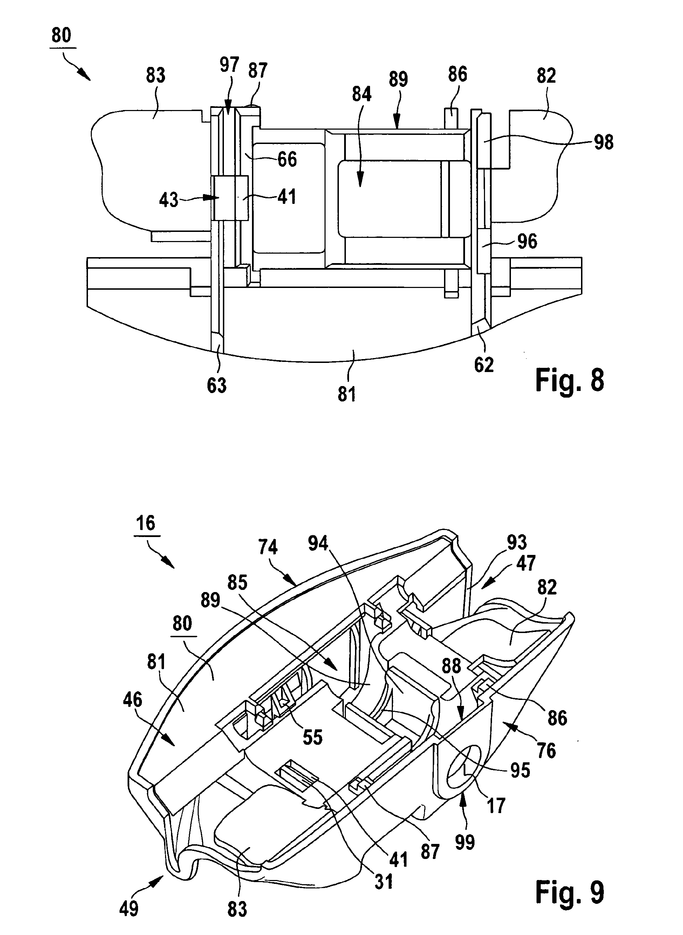

Darüber hinaus ist zur Befestigung der Abdeckkappe 16 an einem zugeordneten Anschlusselement 50 (Fig. 10) mindestens ein Rastelement 55 an der Kappenunterseite 46 vorgesehen. Des Weiteren sind an der Kappenunterseite 46 vorzugsweise ein erstes Wandelement 59 mit einem Rastelement 31 und ein zweites Wandelement 64 mit Rastelementen 33, 35 ausgebildet, die wie bei Fig. 9 beschrieben zur Befestigung eines der Abdeckkappe 16 zugeordneten Bodenelements 80 (Fig. 7) dienen. Die Rastelemente 31, 33, 35, 55 sind beispielhaft als Rastzungen ausgebildet.

Fig. 6 illustriert eine in Fig. 1 der Wischleiste 20 zugewandte Seite 42 der an der Kappenoberseite 72 ausgebildeten Vertiefung 40 sowie eine in Fig. 1 der Wischleiste 20 zugewandte Seite 32 des an der Kappenoberseite 72 ausgebildeten Aufnahmekanals 38. Diese sind bevorzugt zur Kappenunterseite 46 hin wasserdicht abgeschlossen, wie bei Fig. 3 beschrieben.

Fig. 7 zeigt ein beispielhaftes Bodenelement 80 zum zumindest teilweisen Verschließen der Kappenunterseite 46 der Abdeckkappe 16 von Fig. 1. Dieses hat beispielhaft flügelartige Abschluss- bzw. Leitelemente 81, 82, 83, wobei die Elemente 82, 83 über zugeordnete, etwa parallel zueinander ausgerichtete Trägerstege 62 bzw. 63 mit dem Element 81 verbunden sind. Am Trägersteg 62 sind beispielhaft ein Positionierglied 86 und Gegenrastelemente 96, 98 ausgebildet. Etwa parallel zum Trägersteg 63 ist zwischen den Stegen 62, 63 ein Wandelement 66 vorgesehen, an dem ein Positionierglied 87 ausgebildet ist.

Zwischen dem Wandelement 66 und dem Trägersteg 63 sind ein nutartiger Querkanal 97 und eine Befestigungsöffnung 43 ausgebildet. Zwischen dem Wandelement 66 und dem Trägersteg 62 ist ein bogenartiges Aufnahmeelement 89 mit einer Öffnung 84 vorgesehen.

Fig. 8 zeigt das Bodenelement 80 von Fig. 7 mit der Befestigungsöffnung 43, die beispielhaft ein Gegenrastelement 41 aufweist. Die Gegenrastelemente 41, 96, 98 sind bevorzugt als Halteschultern ausgebildet. Fig. 8 verdeutlicht die Öffnung 84 des bogenartigen Aufnahmeelements 89 sowie die Verbindung der Abschluss- bzw. Leitelemente 82, 83 mit dem Element 81 über die Trägerstege 62 bzw. 63.

Fig. 9 zeigt die mit dem Bodenelement 80 von Fig. 7 verschlossene Kappenunterseite 46 der Abdeckkappe 16 von Fig. 1. Zur Befestigung des Bodenelements 80 an der Abdeckkappe 16 wird das Bodenelement 80 wie in Fig. 7 gezeigt gehalten und von der Kappenunterseite 46 der wie in Fig. 2 gezeigt gehaltenen Abdeckkappe 16 in diese eingedrückt. Hierbei wird das Wandelement 59 der Abdeckkappe 16 in den nutartigen Querkanal 97 des Bodenelements 80 geschoben, das Lager- und Befestigungselement 95 wird in die Öffnung 84 des bogenartigen Aufnahmeelements 89 eingeführt und die Rastzungen 31, 33, 35 der Abdeckkappe 16 von Fig. 6 verrasten an den Halteschultern 41, 98 bzw. 96 des Bodenelements 80.

Wie aus Fig. 9 ersichtlich, wird die Kappenunterseite 46 der Abdeckkappe 16 zumindest in den Bereichen der flügelartigen Abschluss- bzw. Leitelemente 81, 82, 83 im Wesentlichen wasserdicht von diesen abgeschlossen. Die Elemente 81, 82, 83 haben hierbei die Funktion, die Abdeckkappe 16 gegenüber einer entsprechenden Fahrzeugscheibe und gegenüber den Endbereichen 37, 39 des Wischblatts 12 von Fig. 1 im Wesentlichen abzudichten. Somit kann in diesen Bereichen im Wischbetrieb des Wischblatts 12 von Fig. 1 kein oder zumindest nur eine reduzierte Menge Spritz- und Regenwasser in die und/oder aus der Abdeckkappe 16 ein- bzw. austreten, wobei ein Ansammeln von Wasser in der Abdeckkappe 16 im Wesentlichen verhindert werden kann. Insbesondere im Bereich des Elements 81 kann eine Reduzierung von in die bzw. aus der Abdeckkappe 16 ein- bzw. austretendem Wasser erreicht werden.

Gemäß der Erfindung bildet die Abdeckkappe 16 mit dem Bodenelement 80 eine im Bereich des ausluchtartigen Vorsprungs 99 angeordnete Austrittsöffnung 88 aus. Das Bodenelement 80 ist bevorzugt dazu ausgebildet, im Wischbetrieb des Wischblatts 12 von Fig. 1 in die Abdeckkappe 16 eintretendes Wasser zu der Austrittsöffnung 88 abzuleiten. Wie aus Fig. 9 ersichtlich, bilden die Abdeckkappe 16 und das Bodenelement 80 eine Aussparung 85 aus, in der ein an der Wischleiste 20 von Fig. 1 fixiertes Anschlusselement 50 (Fig. 10) des ersten Anschlussteils 60 von Fig. 1 befestigbar ist.

Fig. 10 zeigt ein beispielhaftes, dem ersten Anschlussteil 60 von Fig. 1 zugeordnetes Anschlusselement 50, das bevorzugt als Metall-Adapter ausgebildet ist. Das Anschlusselement 50 ist z.B. über krallenartige Halteglieder 51, 52, 53, 54, die die Federschienen 22 des Wischblatts 12 von Fig. 1 umgreifen, fest mit diesen verbunden. An den Haltegliedern 52, 53 sind bevorzugt die Positionierglieder 86 bzw. 87 des Bodenelements 80 von Fig. 7 ausrichtbar.

Gemäß einer Ausführungsform weist das Anschlusselement 50 etwa parallel zueinander ausgerichtete Tragwände 56 auf, die sich in axialer Richtung des Wischblatts 12 von Fig. 1 etwa im Bereich der lateralen Längsseiten 11, 13 des Spoilers 24 erstrecken und mit einer an diesen Tragwänden 56 gelagerten Lagerbuchse 92 zur Aufnahme des Gelenkbolzens 26 von Fig. 1 ein Lagerelement 67 ausbilden. Die Lagerbuchse 92 ist über eine bei Fig. 6 beschriebene Schnappverbindung mit der Abdeckkappe 16 von Fig. 1 verbindbar. Darüber hinaus sind an dem Anschlusselement 50 Gegenrastelemente 57, 58 zur Verrastung mit den Rastelementen 55 der Abdeckkappe 16 von Fig. 6 ausgebildet.

Fig. 11 zeigt eine zweite Ausführungsform der Abdeckkappe 16 von Fig. 1, bei der die Abdeckkappe 16 und das Bodenelement 80 von Fig. 7 als ein einstückiger bzw. einteiliger Formkörper 100 ausgebildet sind, bevorzugt durch Kunststoffspritzen. Hierbei kann die Lagerbuchse 92 von Fig. 10 in den Formkörper 100 eingespritzt werden, bzw. eine entsprechende Lagerung kann in dem Formkörper 100 ausgebildet werden, sodass auf eine Verwendung des Anschlusselements 50 von Fig. 10 verzichtet werden kann. In diesem Fall bildet der Formkörper 100 sowohl die Abdeckkappe 16 von Fig. 1, als auch das Anschlusselement 50 von Fig. 10 aus, d.h. der Formkörper 100 bildet als einzelnes Bauteil das erste Anschlussteil 60 von Fig. 1 aus. Der Formkörper 100 kann zur Materialersparnis einen hohlen, hermetisch dichten Innenraum aufweisen. Alternativ hierzu kann dieser Innenraum mit Kunststoff ausgefüllt sein, um somit ein Ansammeln von Wasser in diesem Innenraum zuverlässig zu vermeiden.

Gemäß einer Ausführungsform hat der Formkörper 100 Befestigungskrallen 68, 69, mit denen der Formkörper 100 im Bereich der lateralen Längsseiten 11, 13 des Spoilers 24 von Fig. 1, z.B. an den Federschienen 22, befestigt bzw. verrastet werden kann. Alternativ hierzu kann der Formkörper 100 an den Federschienen 22 z.B. verklebt, verschweißt oder auf diese aufgeklippst werden.

Gemäß einer weiteren Ausführungsform hat der Formkörper 100 die Aussparung 85 von Fig. 9 zur Aufnahme des Anschlusselements 50 von Fig. 10, wobei der Innenraum des Formkörpers 100 an seiner der Wischleiste 20 zugewandten Seite die Aussparung 85 ausbildet. Hierbei kann der Formkörper 100 ebenfalls die Befestigungskrallen 68, 69 aufweisen und mit diesen im Bereich der lateralen Längsseiten 11, 13 des Spoilers 24 von Fig. 1, z.B. an den Federschienen 22, befestigt bzw. verrastet werden, wobei der Formkörper 100 das Anschlusselement 50 von Fig. 10 bevorzugt vollständig umschließt. Alternativ hierzu kann der das Anschlusselement 50 umschließende Formkörper 100 an den Federschienen 22 verklebt, verschweißt oder auf diese aufgeklippst werden, oder wie oben bei Fig. 10 beschrieben am Anschlusselement 50 befestigt werden.

Gemäß einer weiteren Ausführungsform wird der Formkörper 100 durch Kunststoffspritzen an das Wischblatt 12 angespritzt. Falls hierbei die Lagerbuchse 92 von Fig. 10 in den Formkörper 100 eingespritzt wird, bzw. eine entsprechende geeignete Lagerung für den Gelenkbolzen 26 von Fig. 1 in dem Formkörper 100 ausgebildet wird, kann auf eine Ausbildung der Aussparung 85 verzichtet werden. Hierbei ist eine maximale Dichtigkeit des Formkörpers 100 bzw. der Abdeckkappe 16 von Fig. 1 erreichbar.

## Patentansprüche

1. Wischblatt (12) für einen Scheibenwischer, mit einer Wischleiste (20) und einem an der Wischleiste (20) fixierten Anschlussteil (60) zur Anlenkung der Wischleiste (20) an einem Wischarm (14), der über ein Gelenkelement (44) um eine Schwenkachse (48) schwenkbar mit dem Anschlussteil (60) verbindbar ist und über einen Sicherungssteg (34) mit einem abgewinkelten Sicherungshaken (36) am Anschlussteil (60) fixierbar ist, wobei das Anschlussteil (60) an seiner von der Wischleiste (20) abgewandten Seite (72) eine taschenartige Vertiefung (40) zur Aufnahme des abgewinkelten Sicherungshakens (36) aufweist, und die taschenartige Vertiefung (40) auf ihrer der Wischleiste (20) zugewandten Seite (42) wasserdicht abgeschlossen ist, **dadurch gekennzeichnet, dass** das Anschlussteil (60), insbesondere die Abdeckkappe (16), an seiner der Wischleiste (20) zugewandten Seite (46) ein Bodenelement (80) aufweist, das die der Wischleiste (20) zugewandte Seite (46) des Anschlussteils (60) zumindest abschnittsweise wasserdicht abschließt, um im Wischbetrieb ein Ein-und/oder Austreten von Wasser in das und/oder aus dem Anschlussteil (60) über die der Wischleiste (20) zugewandte Seite (46) des Anschlussteils (60) im Wesentlichen zu verhindern und dass das Anschlussteil (60), insbesondere die Abdeckkappe (16), an seiner dem Wischarm (14) zugewandten Seite (76) mit dem Bodenelement (80) eine Austrittsöffnung (88) ausbildet, wobei das Bodenelement (80) dazu ausgebildet ist, beim Wischbetrieb in das Anschlussteil (60) eintretendes Wasser zu der Austrittsöffnung (88) abzuleiten.

2. Wischblatt nach Anspruch 1, **dadurch gekennzeichnet, dass** das Anschlussteil (60) eine Abdeckkappe (16) aufweist, an der die taschenartige Vertiefung (40) ausgebildet ist.

3. Wischblatt nach Anspruch 1 oder 2, **dadurch gekennzeichnet, dass** das Anschlussteil (60), insbesondere die Abdeckkappe (16), an seiner von der Wischleiste (20) abgewandten Seite (72) einen nutartigen Aufnahmekanal (38) zur Aufnahme des Sicherungsstegs (34) aufweist, wobei der Aufnahmekanal (38) mit der Vertiefung (40) verbunden ist und auf seiner der Wischleiste (20) zugewandten Seite (32) wasserdicht abgeschlossen ist.

4. Wischblatt nach einem der vorhergehenden Ansprüche, **dadurch gekennzeichnet, dass** die von der Wischleiste abgewandte Seite (72) des Anschlussteils, insbesondere der Abdeckkappe (16), öffnungsfrei ausgebildet ist, um im Wischbetrieb ein Durchsickern von Wasser über die von der Wischleiste abgewandte Seite (72) des Anschlussteils (60) zu verhindern.

5. Wischblatt nach einem der vorhergehenden Ansprüche, **dadurch gekennzeichnet, dass** das Bodenelement (80) dazu ausgebildet ist, im Wischbetrieb eine Reduzierung von aus dem Anschlussteils (60), insbesondere der Abdeckkappe (16), austretendem Wasser zumindest an einer dem Wischarm (14) abgewandten Seite (74) des Anschlussteils (60) zu bewirken.

6. Wischblatt nach einem der vorhergehenden Ansprüche, **dadurch gekennzeichnet, dass** das Anschlussteil (60), insbesondere die Abdeckkappe (16) und das Bodenelement (80), eine Aussparung (85) ausbildet, in der ein an der Wischleiste (20) fixiertes Anschlusselement (50) befestigbar ist.

7. Wischblatt nach Anspruch 6, **dadurch gekennzeichnet, dass** das Gelenkelement (44) einen dem Wischarm (14) zugeordneten Gelenkbolzen (26) und eine dem Anschlusselement (50) zugeordnete Lagerbuchse (92) zur schwenkbaren Lagerung des Gelenkbolzens (26) aufweist, wobei das Anschlussteil (60), insbesondere die Abdeckkappe (16), an seiner dem Wischarm (14) zugewandten Seite (76) eine Öffnung (17) aufweist, durch die der Gelenkbolzen (26) in die Lagerbuchse (92) einführbar ist.

8. Wischblatt nach einem der vorhergehenden Ansprüche, **dadurch gekennzeichnet, dass** das Anschlussteil (60), insbesondere die Abdeckkappe (16) und das Bodenelement (80), einstückig ausgebildet ist.

9. Wischblatt nach einem der vorhergehenden Ansprüche, **dadurch gekennzeichnet, dass** das Anschlussteil (60) durch Kunststoffspritzen ausgebildet ist.

10. Wischblatt nach einem der vorhergehenden Ansprüche, **dadurch gekennzeichnet, dass** das Anschlussteil (60) Befestigungsmittel (68, 69) zur Befestigung an der Wischleiste (20) aufweist.

11. Wischblatt nach einem der vorhergehenden Ansprüche, **dadurch gekennzeichnet, dass** das Anschlussteil (60) durch Kunststoffspritzen an der Wischleiste (20) befestigt ist.

12. Wischblatt nach einem der Ansprüche 9 bis 11, **dadurch gekennzeichnet, dass** das Gelenkelement (44) einen dem Wischarm (14) zugeordneten Gelenkbolzen (26) und eine Lagerbuchse (92) zur schwenkbaren Lagerung des Gelenkbolzens (26) aufweist, wobei die Lagerbuchse (92) durch das Kunststoffspritzen an dem Anschlussteil (60), insbesondere an der Abdeckkappe (16), befestigt ist.

## Claims

1. Wiper blade (12) for a window wiper, having a wiper strip (20) and a connection component (60) which is fixed to the wiper strip (20) and is intended for linking the wiper strip (20) to a wiper arm (14), which is connectable to the connection component (60) via a hinge element (44) so as to be pivotable about a pivot axis (48) and is fixable to the connection component (60) via a securing web (34) having an angled securing hook (36), wherein that side (72) of the connection component (60) which faces away from the wiper strip (20) has a pocket-like depression (40) for receiving the angled securing hook (36), and that side (42) of the pocket-like depression (40) which faces the wiper strip (20) is closed in a water-tight manner, **characterized in that** that side (46) of the connection component (60), in particular of the covering cap (16), which faces the wiper strip (20) has a base element (80) which at least partially closes that side (46) of the connection component (60) which faces the wiper strip (20) in a water-tight manner in order, in the wiping mode, substantially to prevent water from entering the connection component (60) and/or from emerging therefrom via that side (46) of the connection component (60) which faces the wiper strip (20), and **in that** that side (76) of the connection component (60), in particular of the covering cap (16), which faces the wiper arm (14) forms an outlet opening (88) with the base element (80), wherein the base element (80) is designed to conduct away water entering the connection component (60) in the wiping mode to the outlet opening (88).

2. Wiper blade according to Claim 1, **characterized in that** the connection component (60) has a covering cap (16) on which the pocket-like depression (40) is formed.

3. Wiper blade according to Claim 1 or 2, **characterized in that** that side (72) of the connection component (60), in particular of the covering cap (16), which faces away from the wiper strip (20) has a groove-like receiving channel (38) for receiving the securing web (34), wherein the receiving channel (38) is connected to the depression (40) and is closed in a water-tight manner on its side (32) facing the wiper strip (20).

4. Wiper blade according to one of the preceding claims, **characterized in that** that side (72) of the connection component, in particular of the covering cap (16), which faces away from the wiper strip is designed to be free of openings in order, in the wiping mode, to prevent water from seeping through via that side (72) of the connection component (60) which faces away from the wiper strip.

5. Wiper blade according to one of the preceding claims, **characterized in that** the base element (80) is designed so as, in the wiping mode, to bring about a reduction in water emerging from the connection component (60), in particular the covering cap (16), at least on a side (74) of the connection component (60) facing away from the wiper arm (14).

6. Wiper blade according to one of the preceding claims, **characterized in that** the connection component (60), in particular the covering cap (16) and the base element (80), forms a cut-out (85) in which a connection element (50) fixed to the wiper strip (20) is fastenable.

7. Wiper blade according to Claim 6, **characterized in that** the hinge element (44) has a hinge pin (26) assigned to the wiper arm (14) and a bearing bushing (92) assigned to the connection element (50) for the pivotable mounting of the hinge pin (26), wherein that side (76) of the connection component (60), in particular of the covering cap (16), which faces the wiper arm (14) has an opening (17) through which the hinge pin (26) is insertable into the bearing bushing (92).

8. Wiper blade according to one of the preceding claims, **characterized in that** the connection component (60), in particular the covering cap (16) and the base element (80), is formed as a single part.

9. Wiper blade according to one of the preceding claims, **characterized in that** the connection component (60) is formed by plastics injection moulding.

10. Wiper blade according to one of the preceding claims, **characterized in that** the connection component (60) has fastening means (68, 69) for fastening to the wiper strip (20).

11. Wiper blade according to one of the preceding claims, **characterized in that** the connection component (60) is fastened to the wiper strip (20) by plastics injection moulding.

12. Wiper blade according to one of Claims 9 to 11, **characterized in that** the hinge element (44) has a hinge pin (26) assigned to the wiper arm (14) and a bearing bushing (92) for the pivotable mounting of the hinge pin (26), wherein the bearing bushing (92) is fastened to the connection component (60), in particular to the covering cap (16), by the plastics injection moulding.

## Revendications

1. Balai d'essuie-glace (12) pour un essuie-glace, doté d'une baguette d'essuie-glace (20) et d'une pièce de raccordement (60) fixée à la baguette d'essuie-glace (20) pour l'articulation de la baguette d'essuie-glace (20) à un bras d'essuie-glace (14) pouvant être relié à la pièce de raccordement (60) par le biais d'un élément d'articulation (44) de façon à pouvoir pivoter autour d'un axe de pivotement (48) et pouvant être fixé à un crochet de fixation coudé (36) prévu au niveau de la pièce de raccordement (60) par le biais d'un étai de fixation (34), la pièce de raccordement (60) comportant, au niveau de son côté opposé (72) par rapport à la baguette d'essuie-glace (20), un renfoncement (40) de type poche permettant de loger le crochet de fixation (36) coudé et le renfoncement (40) de type poche étant fermé de façon étanche à l'eau sur son côté (42) orienté vers la baguette d'essuie-glace (20), **caractérisé en ce que** la pièce de raccordement (60), notamment le bouchon de recouvrement (16), comporte, au niveau de son côté (46) orienté vers la baguette d'essuie-glace (20), un élément de fond (80) fermant au moins en partie de façon étanche à l'eau le côté (46) orienté vers la baguette d'essuie-glace (20) de la pièce de raccordement (60), pour empêcher pour l'essentiel en mode d'essuyage une entrée et/ou une sortie d'eau dans et/ou hors de la pièce de raccordement (60) par le biais du côté (46) orienté vers la baguette d'essuie-glace (20) de la pièce de raccordement (60) et que la pièce de raccordement (60), notamment le bouchon de recouvrement (16), forme, au niveau de son côté (76) orienté vers le bras d'essuie-glace (14), avec l'élément de fond (80), une ouverture de sortie (88), l'élément de fond (80) étant conçu pour évacuer en mode d'essuyage l'eau entrant dans la pièce de raccordement (60) en direction de l'ouverture de sortie (88).

2. Balai d'essuie-glace selon la revendication 1, **caractérisé en ce que** la pièce de raccordement (60) comporte un bouchon de recouvrement (16) au niveau duquel le renfoncement (40) de type poche est réalisé.

3. Balai d'essuie-glace selon la revendication 1 ou 2, **caractérisé en ce que** la pièce de raccordement (60), notamment le bouchon de recouvrement (16), comporte, au niveau de son côté opposé (72) par rapport à la baguette d'essuie-glace (20), un canal de logement (38) de type rainure permettant de loger l'étai de fixation (34), le canal de logement (38) étant relié au renfoncement (40) et fermé de façon étanche à l'eau sur son côté (32) orienté vers la baguette d'essuie-glace (20).

4. Balai d'essuie-glace selon l'une quelconque des revendications précédentes, **caractérisé en ce que** le côté opposé (72), par rapport à la baguette d'essuie-glace, de la pièce de raccordement, notamment du bouchon de recouvrement (16), est réalisé sans ouverture pour empêcher un suintement d'eau en mode d'essuyage par le biais du côté opposé (72), par rapport à la baguette d'essuie-glace, de la pièce de raccordement (60).

5. Balai d'essuie-glace selon l'une quelconque des revendications précédentes, **caractérisé en ce que** l'élément de fond (80) est conçu pour entraîner, en mode d'essuyage, une réduction de l'eau sortant de la pièce de raccordement (60), notamment du bouchon de recouvrement (16), au moins au niveau d'un côté opposé (74) au bras d'essuie-glace (14) de la pièce de raccordement (60).

6. Balai d'essuie-glace selon l'une quelconque des revendications précédentes, **caractérisé en ce que** la pièce de raccordement (60), notamment le bouchon de recouvrement (16) et l'élément de fond (80), forment un évidement (85) dans lequel un élément de raccordement (50) fixé à la baguette d'essuie-glace (20) peut être fixé.

7. Balai d'essuie-glace selon la revendication 6, **caractérisé en ce que** l'élément d'articulation (44) comporte un boulon d'articulation (26) associé au bras d'essuie-glace (14) et une douille de palier (92) associée à l'élément de raccordement (50) permettant de maintenir de façon pivotante le boulon d'articulation (26), la pièce de raccordement (60), notamment le bouchon de recouvrement (16), comportant, au niveau de son côté (76) orienté vers le bras d'essuie-glace (14), une ouverture (17) à travers laquelle le boulon d'articulation (26) peut être introduit dans la douille de palier (92).

8. Balai d'essuie-glace selon l'une quelconque des revendications précédentes, **caractérisé en ce que** la pièce de raccordement (60), notamment le bouchon de recouvrement (16) et l'élément de fond (80), est réalisé d'un seul tenant.

9. Balai d'essuie-glace selon l'une quelconque des revendications précédentes, **caractérisé en ce que** la pièce de raccordement (60) est réalisée par injection de matière plastique.

10. Balai d'essuie-glace selon l'une quelconque des revendications précédentes, **caractérisé en ce que** la pièce de raccordement (60) comporte des moyens de fixation (68, 69) servant à réaliser la fixation à la baguette d'essuie-glace (20).

11. Balai d'essuie-glace selon l'une quelconque des revendications précédentes, **caractérisé en ce que** la pièce de raccordement (60) est fixée à la baguette d'essuie-glace (20) par injection de matière plastique.

12. Balai d'essuie-glace selon l'une quelconque des revendications 9 à 11, **caractérisé en ce que** l'élément d'articulation (44) comporte un boulon d'articulation (26) associé au bras d'essuie-glace (14) et une douille de palier (92) permettant de maintenir de façon pivotante le boulon d'articulation (26), la douille de palier (92) étant fixée à la pièce de raccordement (60), notamment au bouchon de recouvrement (16), par injection de matière plastique.
